# EUROPEAN PATENT SPECIFICATION

(11) **EP 1 869 129 B1**
(45) Date of publication and mention of the grant of the patent: **22.02.2012**
(21) Application number: 06738769.6
(22) Date of filing: 16.03.2006
(51) Int. Cl.: D02G 3/04, D01F 6/46, D01F 1/10

(54) **DYED POLYOLEFIN YARN AND TEXTILE FABRICS USING SUCH YARNS**
GEFÄRBTES POLYOLEFINGARN SOWIE DARAUF BASIERENDE TEXTILE FLÄCHENGEBILDE
FIL DE POLYOLEFINE COLORE ET TISSUS EN TEXTILE UTILISANT CES FILS

(30) Priority: 22.03.2005 US 86839
(43) Date of publication of application: 26.12.2007
(73) Proprietor: Aquadye Fibers, Inc., Fort Myers FL 33901 (US)
(72) Inventor: NEGOLA, Edward, Fort Myers, Florida 33901 (US)
(74) Representative: Martin, Didier Roland Valéry
(86) International application number: PCT/US2006/009747
(87) International publication number: WO 2006/102096

(56) References cited:
- US-A- 3 223 752
- US-A- 3 431 322
- US-A- 4 381 356
- US-A- 5 576 366
- US-A- 6 054 215
- US-A- 6 069 204
- US-A1- 2002 018 895
- US-A1- 2003 211 347
- US-B1- 6 225 404
- US-B1- 6 723 428
- US-B1- 6 869 679

## Description

### Background of the Invention:

The present invention relates to textile fabrics manufactured using polyolefin fibers or yarns modified to dye using disperse dyes. These fabrics are conventionally colored using existing disperse dye or printing systems. Either solid shades or multiple tones of a shade are achieved in a single dye bath or print application. The fabrics in this invention are manufactured into greige goods produced by a knitting, weaving or non-woven process. Solid shades are achieved by use of a single level of dye additive. Multiple ends of fibers each containing differing levels of dye additives will result in multiple tones in a single dye bath. By increasing the amount of disperse dyeable additive in the polyolefin yarn or fiber, the affinity for disperse dye increases accordingly. The fabrics manufactured according to this invention can be stored at the dye house undyed. Color is then added using conventional disperse dye machines or printing methods. Surprising and novel effects can be achieved using economical conventional disperse dye systems known to those skilled in the art. This invention is of particular usefulness in the apparel and home furnishings industry. The fabrics produced feel and appear as conventional fabrics but are lighter in weight. This is due to the fact that the specific gravity of polyolefin is .91 g/cc while the specific gravity of cotton is 1.5 g/cc and that of polyester is 1.38 g/cc. In addition, the light fastness and wash fastness properties are similar to those of polyester.

### Brief Description of the Related Art:

Knitted and woven fabrics and textile articles are an enormous worldwide enterprise. Cotton is the predominant choice of fiber used to make woven or knitted textile fabrics. Cotton has been used through the ages to make yarn and textile articles. Cotton is a natural fiber and is grown in many parts of the world. Many cotton-spinning systems exist worldwide. Cotton yarns are easily produced for both apparel and home furnishings using the cotton spinning system. Egyptian and United States cotton staple is the most widely used cotton to produce yarn and fabrics.

The cotton spinning system starts with bales of cotton picked from the fields. The fiber is called "staple" and is usually ¾" to 1.5" in length (1.9 to 3.8 cm). The longer length cotton is more expensive than the shorter length staple. Longer length staple will result in a superior spun yarn. Machines clean, card, and make roving to various sizes. Cotton is made into yarn of various sizes by twisting or "spinning" the roving on machines well known in this art. A yarn is produced to be either knitted or woven to create fabric for apparel or home furnishings. By using varying sizes of large or small yarns the knitting or weaving manufacturer can make various types of garments or furnishings. If the cotton fabric is manufactured and kept in the undyed state the fabric is called a greige fabric. This is the most common and economical method of manufacturing the most widely used cotton fabrics. Normally the dying or printing of the fabric is done after orders are received from the end user of the fabric. The dyed cotton fabric is then cut into the proper shapes and all sorts of apparel garments are sewn together from these parts.

The most common system of putting color on cotton apparel fabric is to dye the woven, knitted or non-woven fabric. The fabric is placed in a machine containing water, vat or direct dyes and chemicals. The temperature of the dye bath is adjusted to the desired value. The skilled operator will use this process to produce the desired shade on the cotton fabric. The fabric is dried, and finished according to the customer's specifications. The dye house is a capital-intensive operation that contains expensive dye and finishing equipment. A dye house in addition to dyeing will have drying and finishing equipment such as compactors, chemical applicators and rolling or folding equipment. A good substitute for cotton would ideally be able to be processed using present cotton spinning, dyeing and finishing equipment systems to dye and finish cotton are in place worldwide.

Fabric knitted or woven from cotton has standard nomenclature and is purchased as a commodity from most parts of the world. Then the manufacturer sends the cloth to a dye house to be stored as uncolored greige cloth awaiting orders for colored cloth. The dyed cloth is cut and sewn into apparel garments or home furnishing items such as draperies, bedspreads, or upholstery.

Many attempts have been made to produce a synthetic substitute for cotton. Rayon and cellulose acetate were the first successful attempts to produce a substitute for cotton. Cellulose from wood is used in the Rayon process. Rayon and cellulose acetate are widely used in the apparel and home furnishings industry. However producing these yarns and fibers causes a great deal of pollution and they are not produced in the United States of America. Rayon has very desirable qualities. It is easy to dye, and the garments produced are bright and soft and are a good substitute for cotton. Since most rayon has to be imported and manufactured by specialty manufactures, it is expensive and not used as a choice except for expensive high fashion garments. Rayon is also blended with cotton or other synthetics to make fabrics having desirable characteristics such as feel or drape. Rayon or acetate do not provide a weight advantage when substituted for cotton. Their specific gravity is the same as the specific gravity of cotton.

Synthetic acrylic fiber made from acrylonitrile monomer is also used to make a soft fiber. This fiber is not as easily dyed as cotton and is mostly produced in large pigment dyed lots, i.e. the dye is incorporated prior to fiber spinning. Additionally acrylic fiber is more expensive than cotton. It has a specific gravity of 1.17 g/cc, which makes it ideal for a blend with wool for sweaters and for use in hosiery. Acrylic fiber is not a good substitute for cotton.

Synthetic fiber made from polyester accounts for almost one half of all fibers used to produce textile fabrics. Manufacturing polyester is a very large enterprise. Approximately 33 billion pounds of polyester are produced world wide for application in apparel and home furnishings.

Originally introduced as a replacement for cotton, polyester did not replace cotton but has been commonly used to mix or blend with cotton. Over the years polyester fibers have been engineered to feel soft, and to blend with cotton so that a yarn could be made using the cotton spinning system. There are many different blends of cotton/polyester in use. It is very common to find blends of 60% cotton with 40% polyester. These blends are found in knitted and woven textile fabrics. In today's modern dye and finishing facilities undyed fabrics made from yarns that are blends of cotton and polyester are dyed finished and shipped to the end user in solid colors. It takes great skill to match the shade of cotton, which is dyed with one type of dye, to the shade of polyester, which is dyed using disperse dyes. When dyeing blends of this nature, a two-step process is used and it is more expensive than using a one step process.

Polyester has some drawbacks. It is difficult to dye and great skill is needed to dye a uniform shade of polyester and cotton. The polyester fibers require high temperatures under pressure to absorb high energy disperse dyes. Cotton is dyed with direct or vat dyes that do not require pressure or high temperatures. Most skilled dye houses keep large quantities of disperse shades for the purpose of dyeing polyester and blends of polyester and cotton. Also, fabrics made from 100% polyester, feel heavy to the wearer.

It is very desirable in the apparel and home furnishings industry to have available a synthetic yarn or fabric that has novel characteristics. Ideally the synthetic fiber could be used to make a yarn for a fabric that would be similar to a fabric made from 100% cotton. Polyester does not meet these standards

Polyolefin (polypropylene, polyethylene) is a manufactured fiber, which is composed of at least 85% ethylene, propylene or other olefin units. Polyolefin fiber can be an ideal substitute for cotton except for the fact that is not easily dyed on conventional dyeing or printing systems. I have found that a polyolefin of 1.8 denier per filament and a 1.5" to 2" (3.8 to 5.1 cm) staple length is a good substitute for cotton. In addition to its "feel", polyolefin fiber has the following characteristics:
1. Polyolefin fiber is easily converted into yarn using existing spinning systems;
2. Polyolefin yarn will process well on knitting and weaving machines;
3. Polyolefin yarn is soft to the touch;
4. Polyolefin staple processes well on non woven machines;
5. Polyolefin fabrics exhibit good hand;
6. Polyolefin fabrics will dry quickly;
7. Polyolefin fabrics will permit moisture transport but retain body heat; and
8. Polyolefin fabrics are very stain resistant.

The main disadvantage of polyolefin fiber is that it is not dyeable by conventional dye systems. Almost all polyolefin fiber and yarn is pigment or solution dyed, i.e. the pigment is incorporated prior to fiber spinning. Fabric made from pigment dyed yarn cannot be dyed to fashion shades as orders are received. This makes fabric manufacture expensive and inventories too large to manage in the apparel and home furnishings industry. Pigmented polypropylene is presently used mainly for making carpet and rugs. Polyolefins have a relatively low melting point. For certain applications, polyolefin fibers melt at too low a temperature. Consequently, polyolefin fibers do not have dimensional stability at high dryer temperatures.

Several attempts have been made to produce dyeable polyolefin fibers.

US Patent No. 6,420,482 to Dominguez et al. relates to a composition comprising a blend of polyolefin with the reaction of a functionalized polyolefin and polyetheramine in which the polyetheramine is grafted into the functionalized polyolefin in a customary mixing apparatus.

US Patent No. 6,146,574 to Henkee et al. also relates to a composition comprising a blend of polyolefin with the reaction of a functionalized polyolefin and polyetheramine in which the polyetheramine is grafted into the functionalized polyolefin in a customary mixing apparatus.

US Patent No. 6,126,701 to Calogero relates to a method of dyeing unmodified polyolefin fibers. The unmodified polyolefin fibers are contacted with a colloidal emulsion that is at or above the glass transition temperature (T_{g}) of the polyolefin. The emulsion is prepared by mixing water with a long chain alkyl substituted anthraquinone dye dissolved in an organic solvent.

US Patent No. 5,576,366 to Sheth relates to compositions of ethylene alkyl acrylate grafted onto polypropylene which are dyeable with disperse or cationic dyes. A small amount of polyester may be included, along with a hydrophilic modifier comprising a monoglyceride and a salt of a liner alkyl. The hydrophilic modifier also acts as a compatibilizer to bridge the polyester and the polypropylene. Sheth also discloses a process for dyeing polypropylene fibers which combines the polypropylene with a thermoplastic copolymer of ethylene and alkyl acrylates having 1 to 4 carbon atoms in the alkyl group into fibers, adding the polyester to the polypropylene matrix, spinning the composition into fibers, and exposing the fibers to a dye bath.

US Patent No. 5,550,192 to Sheth et al. teaches a polyolefin fiber which comprises about 98% to 70% by weight of a polypropylene and a selected amount of an ethylene copolymer comprising about 70 to 82% by weight ethylene and about 30 to 18% by weight of an alkyl acrylate wherein the alkyl has one to four carbon atoms, said composition containing 0.2 to 3.0% alkyl acrylate by weight the sum of the polypropylene and ethylene copolymer, wherein at least a portion of said copolymer is grafted onto said polyolefin, and an effective amount of a selected disperse dye diffused into the polypropylene to produce a colored fiber.

US Patent No. 5,169,405 to Hoyt et al. relates to a predominantly polyester fabric having a multi-colored pattern. The fabric has at least one nonaromatic, partially crystalline polymethylolefin yarn melting above about 180°C as less than 50% by weight of the fabric, and polyester yarn. The polymethylolefin yarn and the polyester yarn are fabricated together in a predetermined pattern and then piece dyed with disperse dye techniques.

US Patent No. 4,320,046 to Havens relates the dyeing of olefin polymers, polyethylene and polypropylene, by dispersing in the olefin polymer a small quantity of a copolymer of a C-14 or higher alpha-olefin and polypropylene-graft-maleic anhydride and subsequently treating such compositions with an aqueous solution of a basic dye stuff such as Malachite Green.

US Patent No. 3,926,553 to Fuest relates to a method of selectively controlling the degree of dyeability of shaped polyolefin articles containing a minor amount of an alkyl or aralkyl amine-containing polymer. The shaped article is treated with a weak-acid anionic surfactant to enhance dyeability or a strong-acid anionic surfactant to inhibit dyeability.

US Patent No. 3,652,198 to Farber et al. relates to a process of treating shaped articles made from poly(alpha-olefins) or polyesters and a thermoplastic nitrogen containing basic polymer in a discontinuous fashion with a Lewis acid to obtain multicolor articles.

US Patent No. 3,622,264 Brown et al. relates to a process for dyeing polyolefin fabrics into multicolor patterns by using a mixture of different classes of dyes in a single dyebath, which may optionally contain anionic and nonionic surfactants.

US Patent No. 3,315,014 to Coover et al. relates to polypropylene fibers which are modified with polymeric vinyl pyridines to increase the fibers dye affinity and impart resistance to oxidation and weathering.

US Patent No. 3,256,362 to Craubuer et al. relates to modified polyolefins produced from ethylenically unsaturated polyesters.

It is known in the art that grafting certain functionality on to a polyolefin will make the polyolefin dyeable. All of the above-listed patents refer to chemistries that is quite different from the chemistry of this invention. For example, Craubuer No. 3,256,362 refers to unsaturated polyester, which differs from the rest of the above-listed patents. The Craubuer patent requires a difficult to mix and unrelated type of polyester. The unsaturated polyester in that patent is not amorphous and does not blend well at lower temperatures required to produce polyolefin.

Patent Cooperation Treaty application number WO03029536A1 to Bertamini et al. ("Bertamini") teaches a method for making polyolefin polymers dyeable with disperse or reactive dyes. The method includes blending a polyolefin polymer (from 95 to 55% by weight) and a fibril forming polymer (from 5 to 45% by weight) to provide a mixture of polyolefin and fibril forming polymers. The polymer mixture is melted in an extruder to provide a substantially homogenous molten mixture of polyolefin and fibril forming polymers. The molten mixture is forced through a spinneret having a length to diameter (L/D) ratio ranging from about 3 to about 30 to provide a fiber having a polyolefin matrix and elongate, substantially discontinuous fibrils of the fibril forming polymer dispersed into the polyolefin matrix, whereby the exterior surface of the fibers is substantially devoid of fibnls. Bertamini teaches that polyamide and polyesters make suitable fibril forming polymers. Bertamini also teaches the use of 0 to 20% by weight of a polyolefin compatibilizer selected from the group consisting maleated polypropylene, maleated ethylene-propylene copolymer, maleated styrene-butadiene-styrene copolymer, maleated styrene-ethylene-butadiene-styrene copolymer, maleated ethylene-propylene-diene monomer copolymer, and maleated ethylene-propylene rubber. Other polyolefin compatibilizers are also disclosed. Suitable polyesters include polyethylene terephthalate, polybutylene terephthalate, and polytrimethylene terephthalate. Bertamini teaches that polyester melt viscosity to polyolefin melt viscosity ratio of 10:1 to 40:1 is preferred for fibril formation. Thus, it is clear that Bertamini is directed toward using polyesters that are semicrystalline and that are relatively high molecular weight as is typically used in the production of textile fibers.

Document US-6,869,679B1 discloses a spun yarn comprising a fiber blend of polyester fibers and polyolefin fibers, wherein the polyolefin fibers are a mixture of olefin mixed with a modifier comprising amorphous PETG and maleic anhydride.

### Summary of the Invention:

The present invention relates to a dyeable polyolefin fiber comprising polyolefin and dye enhancer. The dye enhancer may be any applicable terephthalate-based copolyester. The terephthalate-based copolyester may be selected from the group consisting of PETG, a glycol-modified poly(ethylene terephthalate) copolyester, preferably modified with 1,4-cyclohexanedimethanol and an acid- or glycol- modified copolyesters of poly(cyclohexanedimethylene) terephthalate PCT, namely ***PCTA and PCTG**.* The dye enhancer may be comprise up to about 40% by weight of the dyeable polyolefin fiber, preferably the dye enhancer may comprise between about 0.5% to about 25% by weight of the dyeable polyolefin fiber, still more preferably about 1 % to about 12.5% by weight of the dyeable polyolefin fiber.The dyeable polyolefin fiber may optionally comprise an effective amount of a polyolefin compatibilizer.

Polyolefins of the present invention may the polypropylene may be selected from the group consisting of polypropylene homopolymers, polypropylene copolymers and mixtures thereof. Alternatively, the polyolefins of the present invention may comprise polyethylenes.

The object of the present invention is to create a novel knitted woven or non-woven fabric using synthetic yarn that has most of the characteristics of cotton fabrics and overcomes the disadvantages of polyester fabrics. To qualify as a good substitute for cotton fabrics, the fabric has to be available in greige goods, be easy to dye on conventional systems, be soft to touch; the fabric must "breathe" and wick moisture away from the body. The fabrics made using the synthetic yarns of the invention will be easy to wash either by hand or machine and will not stain by ordinary household food stains. The fabrics made using the invention are lighter in weight using standard size yarns and dry faster than cotton fabrics at room temperature. The fabrics made using this invention have superior light and wash fastness.

Although the cotton spinning system is the most widely used system, one skilled in the art can produce fiber that can be made into yarn using any conventional spinning system. Worsted, woolen and modified worsted are some of the more common spinning methods. The fiber length and denier can be varied to fit any spinning system.

In addition to staple fiber spun into yarn there is a large production of continuous filament yarn. This invention can be applied to fibers or filaments as previously defined herein.. Briefly described, the present invention relates to a method of using disperse dyeable synthetic polyolefin yarn and fibers to manufacture knitted woven and non woven fabric greige goods that are easy to dye and process using commercially available disperse dye systems. The novel advantages of these greige goods over cotton, and blends of cotton polyester will be apparent from the detailed description. This invention also shows the preferred novel additives to be grafted onto polyolefin to make it disperse dyeable.

Further objects and further scope of the present invention will become apparent from the detailed description given hereinafter. It should be understood however that the detailed descriptions and examples are given by way of illustration only since various changes and innovations within the spirit of this invention will become apparent to those skilled in the art.

### Brief Description of the Figures:

Figure 1 shows color strength and Delta E CMC Δ*E_{CMC}*) as a function of dyeing enhancer masterbatch concentration (Example XI) using the dyed fiber containing 20% masterbatch as the reference sample.
Figure 2 is a micrograph of a cross section of a fiber A of Example XIII at 2000X magnification.

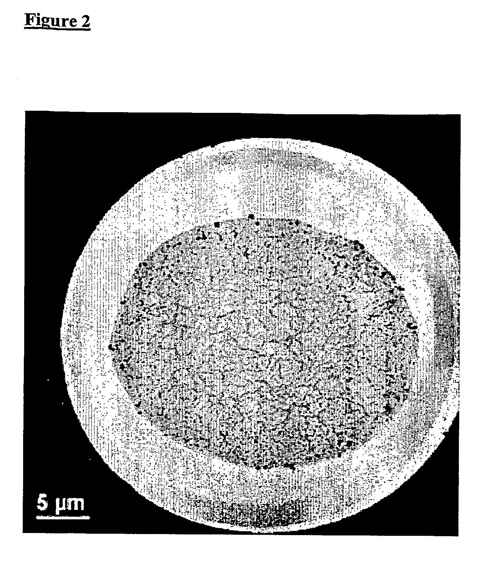

Figure 2 is a micrograph of a cross section of a fiber A of Example XIII at 3600X magnification.

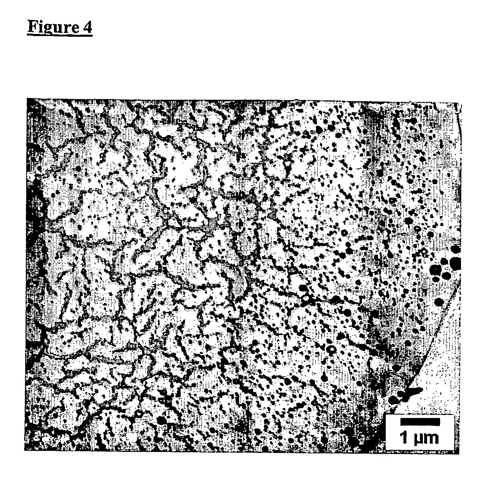

Figure 4 is a micrograph of a cross section of a fiber A of Example XIII at 9500X magnification.

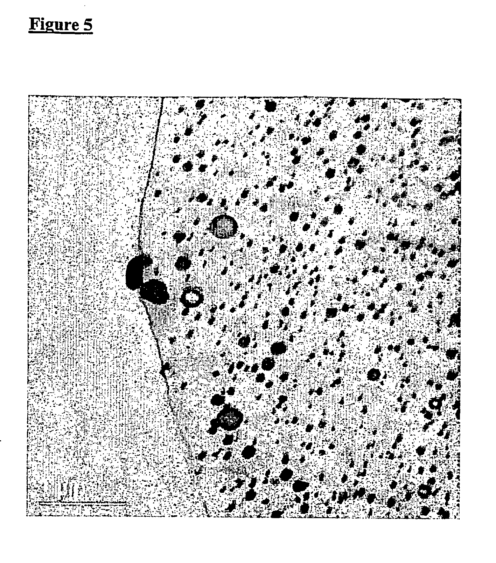

Figure 5 is a micrograph of a cross section of a fiber A of Example XIII at 18000X magnification.

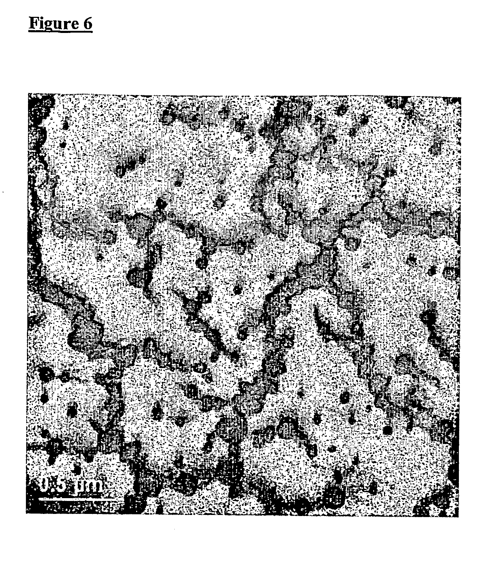

Figure 6 is a micrograph of a cross section of a fiber A of Example XIII at 36000X magnification.

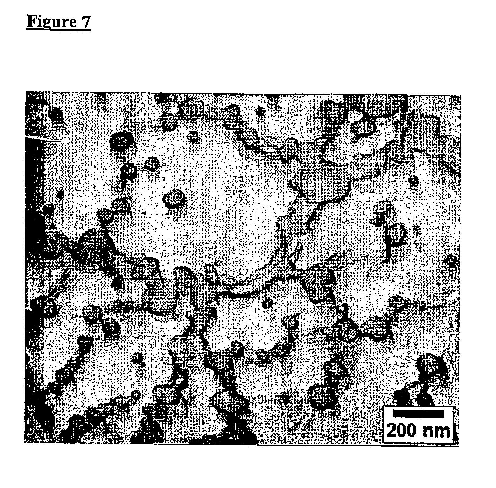

Figure 7 is a micrograph of a cross section of a fiber A of Example XIIII at 61000X magnification.

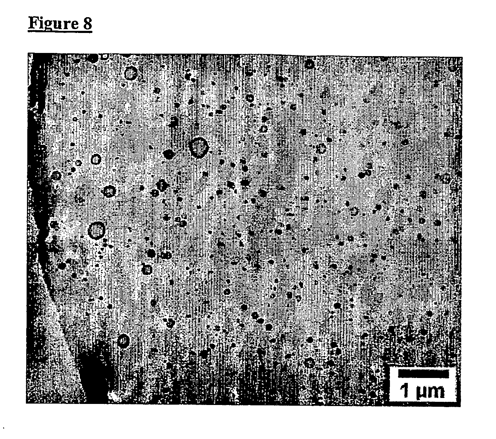

Figure 8 is a micrograph of a cross section of a fiber B of Example XIII at 12500X magnification.

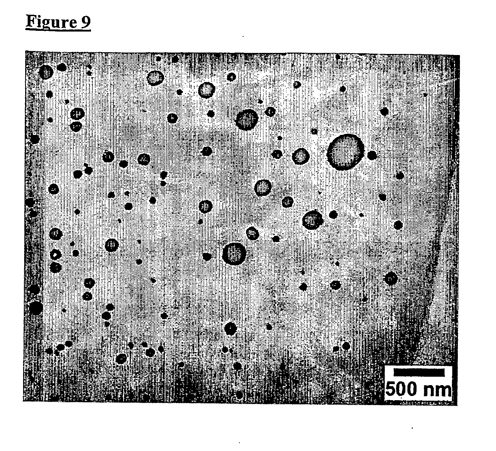

Figure 9 is a micrograph of a cross section of a fiber B of Example XIII at 25000X magnification.

### Detailed Description of the Invention:

The present invention relates to manufacturing a knitted, woven or non-woven fabric using a polyolefin yarn or fiber that has been enhanced to accept disperse dye. The polyolefin compositions of the invention are capable of accepting disperse dyes. The polyolefin does not dye but the additive that is added to the polyolefin of the present invention will accept any disperse dye that is used at dye facilities used to dye polyester or blends of polyester and cotton. No special dyes have to be purchased to achieve shades of all description. This invention uses additives in polyolefin to create yarns that are made into woven, knitted or non-woven greige goods fabric. The fabric of this invention can be stored as uncolored inventory. The greige goods are colored using disperse dyes usually used to dye polyester. Very high temperatures used to dye polyester are not necessary to dye the polyolefin fabrics. A temperature of 220°F - 266°F (104°C - 130°C) is ideal. Bright deep shades of any color are achieved when dyeing polyolefin fabrics using this invention.

For the purposes of this invention, the term "fiber" refers to a shaped polymeric body of high aspect ratio capable of being formed into two or three dimensional articles such as woven or nonwoven fabrics. The term "polyolefin fiber" means fibers prepared from polyolefin that may include the various antioxidants, pigments, and additives described herein. In addition, fiber refers to filaments that may take any of the various forms well known to persons skilled in the art, namely monofilaments, multifilaments, tows, staple or cut fibers, staple yarns, cords, woven, tufted, and knitted fabrics, nonwoven fabrics, including melt blown fabrics and spunbond fabrics, and multilayer nonwovens, laminates, and composites from such fibers. The fibers of the present invention may be a mono filament, multifilament, or bicomponent fiber. Fibers of the present invention may be produced as a staple, yarn, cord, or a direct spun, nonwoven fabric.

Multitones are dyed in addition to just one solid color. Polyolefin yarns with dye enhancer of from 1 % to 15% by weight is be used to make fabrics dye to multi-tones of the same shade in one dye bath containing disperse dyes. This is achieved through the addition of varying strengths of the dye enhancer specified in this invention into the polyolefin fibers or yarns. By example, a yarn with 5% by weight dye enhancer is designated "A", a yarn with 3% by weight dye enhancer designated "B" and a yarn with 1.5% by weight dye enhancer designated "C". When yarn A, B, and C are placed together on fabric forming machines, such as a weaving machine, the resultant fabric is dyed into novel three self tones of a color in a single dye bath. One will be dark, one medium and one light. The preferred range of concentrate is from 1% to 15% by weight.

When a fabric is made using yarns containing two dye levels and one yarn without any dye enhancer, the result will be a fabric with two tones and a white. This aspect creates novel and surprising effects. One skilled in the art will find many pleasing ways to make novel fabrics using this invention.

Fabric made from polyolefin yarn will dye a solid shade when made using yarn that has only one level of dye enhancer. The preferred dye enhancer amount should be 5% on the weight of the goods. Other concentrations, from 1 to 15%, can be used to vary the dye take up.

Surprising and novel effects can be achieved using 100% polyolefin yarns of this invention. Among the benefits of using polyolefins made according to this invention are as follows:
1. Polyolefin fabric is wash fast in warm water;
2. Polyolefin fabric can be line dried or quickly machine dried at a cool temperature;
3. Disperse dyed polyolefin fabric does not stretch or shrink in the wash process;
4. Polyolefin fabric dries substantially wrinkle free;
5. Polyolefin fabric is stain resistant;
6. Polyolefin fabric is soft to the touch;
7. Polyolefin fabric is 38% lighter than cotton;
8. Polyolefin fabric will wick moisture and breathe;
9. Polyolefin fabrics will resist mildew and algae growths;
10.. Polyolefin yarn can be manufactured by either spinning or continuous filament; and
11. A polyolefin fabric is characterized by being an easy care, travel friendly garment.

### Polyolefin Dye Enhancers:

There are various methods of making or enhancing polyolefin to accept dyes. A preferred method of rendering polyolefin disperse dyeable is as follows:

An amount of a dye enhancer is added to the polyolefin polymer. The dye enhancer may be any amorphous terephthalate-based copolyester. The amorphous terephthalate-based copolyester may be selected from the group consisting of PETG, a glycol-modified poly(ethylene terephthalate) copolyester, preferably modified with 1,4-cyclohexanedimethanol and an acid- or glycol-modified copolyesters of poly(cyclohexanedimethylene) terephthalate PCT, namely ***PCTA and PCTG.*** The preferred dye enhancer is amorphous PETG (glycol modified polyethylene terephthalate), which is added to the polyolefin. Amorphous PETG is selected because it "melts" at a temperature below that of polypropylene. This enables one skilled in the art to make dyeable polyolefin using a conventional polyolefin fiber extrusion machine. No special equipment is needed to perform this operation. The advantage of this additive is the fact that drying and moisture reduction is not necessary to add the dye enhancer.
In addition to the amorphous terephthalate-based copolyester, the dye enhancer may additionally comprise a polyolefin compatibilizer. The ***polyolefin compatibilzer*** may be selected from the group consisting of poly(ethylene-co-vinyl acetate)-graft- maleic anhydride, polypropylene-graft-maleic anhydrid (not claimed), and polyethylene-polypropylene-grafted-maleic anhydride. The preferred polyolefin compatibilizer is polypropylene-graft-maleic anhydride to improve the dispersion of the PETG in the polyolefin fiber.

A preferred dye enhancer is amorphous PETG No. 14285 from Eastman Chemical and polypropylene-graft-maleic anhydride Polybond 3200 from Uniroyal. A blend using 96% PETG 14285 and 4% polypropylene-graft-maleic graft anhydride is ideal (percentages are by weight unless otherwise specified). I let the blend down in polypropylene to create a compound that is 50% active. 50% is polypropylene, 48% is amorphous PETG, and 2% is polypropylene-graft-maleic anhydride. One skilled in the art will choose the appropriate method to make the compound. Of course by experimentation, one skilled in the art would vary the percentages to suit their needs.

Preparation of compositions of this invention can be achieved in several different ways. The dye enhancer may added to the polyolefin by bringing the dye enhancer, either comprising the amorphous terephthalate-based copolyester alone or optionally containing the polyolefin compatibilizer, into contact with the polyolefin polymer by, for example, dry blending these materials and then passing the overall composition through a extruder. One skilled in the art would readily appreciate that the ingredients can be fed individually to the feed of a melt extruder rather than dry blending them prior to feeding to the extruder. Alternatively, the ingredients may be fed directly to a mixing device such as a compounding extruder, high shear continuous mixer, two roll mill, an intensive mixer such as a Banbury, etc. An alternate method of mixing to ensure intimate dispersion of the dye enhancer is to mix in two stages. In a first stage a concentrate (or ***masterbatch***) is prepared comprising the dye enhancer mixed with an appropriate amount of polyolefin polymer, in a high shear mixer such as a Banbury mixer or a compounding extruder. In a second stage, the concentrate and all remaining ingredients including additional polyolefin polymer are mixed under high shear. It is also possible to mix the second stage in a low shear environment, for example, in the extruder section of a fiber spinning line. Overall, the objective is to obtain the appropriate dispersion of all ingredients and this is readily achieved by inducing sufficient shear and heat to cause the plastics component(s) to melt. However, time and temperature of mixing should be controlled as is normally done by one skilled in the art so as to avoid excessive molecular weight degradation and unnecessary volatilization of ingredients. Depending on the polyolefin plastics component(s) employed, a melt temperature range of about 250°F to about 550°F (121 °C to about 260°C) could be expected. If the compositions of the invention are in pellet form they may be packaged in Gaylord's or drums without special gas sealant necessary.

The polyolefin compatibilizer is used to help the amorphous terephthalate-based copolyester securely anchor onto the polyolefin. The polyolefin compatibilizer is not necessary to make the polyolefin disperse dyeable. However, it was found that if the polyolefin compatibilizer is eliminated, the amorphous terephthalate-based copolyester does not disperse evenly. This results in uneven dispersion and unlevel dyeing.

### Dyeable Polyolefin Fiber and yarn:

Pellets containing a dye enhancer comprising an amorphous terephthalate-based copolyester, 48% amorphous PETG (polyester), and polyolefin compatibilizer, 2% polypropylene-graft-maleic anhydride, and 50% polypropylene are fed to a polyolefin fiber extruder using 10% owg (on weight of the goods). The result is a fiber containing 5% disperse dyeable dye enhancer blended with 95% polyolefin. One skilled in the art will vary the blend of graft to polyolefin to achieve the desired shade when subjected to a dye bath containing disperse dye. I have varied the mix and dyed the fiber and found the preferred enhancement to be 5% owg for deep solid shades and 2.5% owg for lighter shades. When subjecting a 5% owg fiber and a 2.5% owg fiber to a single dye bath a pleasing two-tone shade resulted from a single dye bath. The nomenclature "dye enhanced polyolefin" describes the dyeable polyolefin product

Pellets containing a blend of 50% polyolefin, 48% amorphous PETG and 2% polypropylene-graft-maleic anhydride is preferred for the following reasons:
1. Disperse dye is the only dye that the graft will absorb.
2. The blend melts at the processing temperature of polyolefin
3. The blend combines and easily extrudes into pellets.
4. The blended pellets do not have to be bone dry to feed into the polyolefin fiber extruder
5. The blend mixes evenly and is well dispersed within the polyolefin during fiber extrusion.
6. The dyeable graft is stable when subjected to any dyeing conditions
7. Grafted yarn or fabric will dye or print using standard disperse dyes.
8. Printing is easily achieved and requires only 2 to 4 minutes exposure to steam at a 212°F (100°C) temperature.
9. Colors are wash fast at warm temperatures of 175°F (79.4°C).
10. The graft enhances polyolefin "feel".

The present invention will now be described in more detail.

### Example I - Single Color Fabrics

a.) Pellets of polyolefin with a Melt Flow Index of 8-22_{[HI1]} dg/min (measured using ASTM D-1238, condition L-230/2.16) are extruded and intimately mixed with the blend using the above-preferred mixture of PETG and polypropylene-graft-maleic anhydride. The blend of 95% polyolefin and 5% PETG/polypropylene-graft-maleic anhydride is extruded into staple fibers using conventional staple extrusion equipment. The fiber is 1.8 dpf and is cut to 1.5" (3.8 cm). Approximately 1,000 pounds (454 kg) of staple are produced and baled. The denier per filament is close to that of cotton and so is the staple length.
b.) The dye enhanced polyolefin bales of staple fiber are blended together at the cotton carding process and made into an intimate blend of roving. The roving made using conventional cotton equipment is ring spun into a 10/1 cotton count and taken up on 3-pound (1.3 kg) packages. Approximately 1000 pounds (454 kg) of yarn is produced
c.) The 10/1-polyolefin yarn is knitted on a 10 cut circular knitting machine. This manufacturing process forms an undyed greige goods fabric that is ideal to make cut and sewn sweaters.
d.) The sweater greige goods fabric is dyed in a conventional jet-dyeing machine ordinarily used to dye polyester. The temperature is kept at 250°F (121 °C) to avoid damage to the polyolefin. A disperse dye Terasil Blue BRL at 0.5% owg is used with standard dye dispersion chemicals and water. The resultant sweater fabric is a novel and pleasing bright shade of deep blue. The fabric is dried in a relatively cool oven. The temperature is kept below the melt temperature of polyolefin or at 200°F (93.3°C). The water evaporates leaving a dry bright fabric, which is rolled and wrapped for shipment. Drying time is greatly reduced in comparison to a cotton or cotton polyester blend because the polyolefin only holds limited amounts of water.
f.) The sweater fabric is cut and sewn and is surprisingly novel. It is at least 30% lighter in weight than a cotton sweater made to the same specifications. This is because the polyolefin specific gravity is 0.91 g/cc versus 1.38 g/cc or more for cotton or cotton-polyester blend.

This novel sweater will actually float in water. The sweater has the look and feel of cotton yet is substantially lighter in weight. It is understood by one skilled in the art that different weight fabrics using various sizes of yarn can be produced in the same manner.

### Example 11 - Tone on Tone Polyolefin Fabric

a.) Pellets of polyolefin with a Melt Flow Index of 8-22 dg/min are intimately mixed with a dye enhancer described above. The mixture is 95% polyolefin with 5% dye enhancer consisting of PETG and polypropylene-graft-maleic anhydride as described in this invention. The mixture is extruded into staple fibers using conventional staple extrusion equipment. The dpf is 1.8 and the staple is cut to 1.5" (3.8 cm). Approximately 1,000 pounds (454 kg) of staple are produced and baled. The denier per filament is close to that of cotton and so is the staple length. This batch is called "staple A".
b) Pellets of polyolefin with a Melt Flow Index of 8-22 dg/min are intimately mixed with a dye enhancer described above. The mixture is 97% polyolefin with 3% disperse dye enhancement concentrate consisting of PETG and polypropylene-graft-maleic anhydride as described in this invention. The mixture is extruded into staple fibers using conventional staple extrusion equipment. The dpf is 1.8 and the staple is cut to 1.5" (3.8 cm). Approximately 1,000 pounds (454 kg) of staple are produced and baled. The denier per filament is close to that of cotton and so is the staple length. This batch is called "staple B".
c.) Separately the polyolefin bales of staple fiber are blended at the cotton carding process and made into roving. The roving is made using conventional cotton equipment is spun into a 10/1 cotton count and taken up on 3 pound (1.3 kg) packages. Approximately 1000 pounds (454 kg) of each yarn is produced for a total of 1,000 pounds of polyolefin with 5% concentrate (yam A) and 1000 pounds of polyolefin grafted with 3% concentrate (yarn B). Both will accept disperse dyes.
d.) Polyolefin Yarn A containing a 5% concentrate, and Polyolefin yarn B containing a 3% concentrate are placed side by side on a 10 cut knitting machine. Both yarns are 10/1. The polyolefin yarns are knitted on a 10 cut circular knitting machine. This manufacturing process forms an undyed greige goods fabric that is ideal to make sweaters when cut and sewn.
e.) The sweater greige fabric is dyed in a conventional jet-dyeing machine ordinarily used to dye polyester. The temperature is kept at 250°F (121 °C) to avoid damage to the polyolefin. A disperse dye, Terasil Blue BRL at 0.5% owg is used with standard dye dispersion chemicals and water. The resultant sweater fabric is a novel and pleasing two-tone shade of blue. Only one dye bath is used to obtain more than one shade on the fabric. The fabric is dried in relatively cool oven. The temperature is kept below the melt temperature of polyolefin or 200°F (93.3°C). Drying time is greatly reduced in comparison to a cotton or cotton polyester blend. The water flashes off the polyolefin leaving a dry bright two-tone blue fabric, which is rolled and wrapped for shipment.
f.) The two-tone sweater fabric is cut and sewn and is surprisingly novel. The two-tone effect is novel and looks natural like a wool or linen. It is 30% lighter in weight than a cotton sweater made to the same specifications. This is because the polyolefin specific gravity is 0.91g/cc versus 1.38 g/cc or more for cotton or cotton-polyester blend. This novel sweater will actually float in water.

It is to be understood that by varying the amount of concentrate and the number of polyolefin yarns fed to a knitting or weaving machine a person skilled in the art can create numerous fashionable and novel greige goods fabrics made from polyolefin, or blends of polyolefin with other yarns fed to various knitting or weaving machines. It is understood by one skilled in the art that different weight fabrics using various sizes of yarn can be produced in the same manner.

### Example III - Solid Shade of Continuous Filament Fabric

a.) Pellets of polyolefin with a Melt Flow Index of 8-22 dg/min are extruded and intimately mixed with the blend using the above-preferred mixture of PETG and polypropylene-graft-maleic anhydride. The blend of 95% polyolefin and 5% PETG/polypropylene-graft-maleic anhydride is extruded into a continuous filament yarn using conventional extrusion equipment. The filament fiber is 5.4 dpf. Approximately 1,000 pounds (454 kg) of yarn are produced and wound on pirns.
b.) The undrawn yarn is drawn 3.0X and false twist textured on a conventional texturing machine. The textured yarn has 277 filaments of 1.8 denier/filament. The yarn is soft and feels like cotton. The yarn is bright and uncolored and put up on 3 pound (1.3 kg) cones. Proper spin finish is applied in the process.
c.) The textured yarn is knitted on a ten cut knitting machine. The result is a bright soft looking sweater greige fabric that is not dyed.
d.) The bright textured continuous filament sweater greige goods fabric is dyed in a conventional jet-dyeing machine ordinarily used to dye polyester. The temperature is kept below 250°F (121 °C) to avoid damage to the polyolefin. A disperse dye Terasil Blue BRL at .005% owg is used with standard dye dispersion chemicals. The resultant sweater fabric is a novel and pleasing bright shade of solid colored deep blue. The fabric is dried in relatively cool oven. The temperature is kept below the melt temperature of polyolefin or 200°F (93.3°C). Drying time is greatly reduced in comparison to a cotton or cotton polyester blend. The water evaporates off the polyolefin leaving a dry bright slinky fabric, soft to the touch, which is rolled and wrapped for shipment.
e.) The continuous filament sweater fabric is cut and sewn and is surprisingly novel. It is bright, "slinky" and fashionable. It is a solid color but by using the same technique as in example II above, one skilled in the art can vary the polyolefin yarns and achieve a two or three tone novel effect from one dye bath. It is 30% lighter in weight than a sweater made from polyester. This is because the polyolefin specific gravity is 0.91 g/cc versus 1.38g/cc for polyester. This novel sweater will actually float in water. It is wash and wear and would be ideal for a travel garment.

It should be understood by one skilled in the art that the same technique could be used to produce finer yarns of, for example, 20, 70, 120, or 150 denier. The example above is to show that continuous filament yarns can be made dyeable using the same PETG and polypropylene-graft-maleic anhydride blend that is used to make staple fiber dyeable. Woven fabric can also be made using these yarns.

### Example IV - Printing Polyolefin Fabrics

Screen Printing- The knitted fabric from Example I was fed to a 6 color aqueous continuous screen-printing machine. A standard dye paste using disperse dyes was prepared for each screen with thickener. The screens were made to allow a six color pleasing floral pattern to be produced. The print paste was screened on the fabric. The fabric was fed to a steam box to set the dyes. Two to four minutes of steam at 212°F (100°C) is required to set the dye. The fabric is fed to the steam box and is taken up in a continuous system washed of excessive dyes and dried. The result was a pleasing 6-color floral printed sweater fabric.

The novel effect was achieved without bleeding or excessive pick up. Drying time was greatly reduced and the oven was set to allow 200°F (93.3°C) to come in contact with the fabric. It is understood that woven fabric can also be processed using the same technique.

### Example V - Space Dye Printing Color on Yarn using the Knit de Knit process

a.) Pellets of polyolefin with a Melt Flow Index of 8-22 dg/min are extruded and intimately mixed with the blend using the above-preferred mixture of PETG and polypropylene-graft-maleic anhydride. The blend of 95% polyolefin and 5% PETG/polypropylene-graft-maleic anhydride is extruded into a staple mass using conventional staple extrusion equipment. The fiber is 1.8 dpf and is cut to 1.5 (3.8 cm). Approximately 1,000 pounds (454 kg) of staple are produced and baled. The denier per filament is close to that of cotton and so is the staple length.
b.) The polyolefin bales of staple fiber are blended together at the cotton carding process and made into roving. The roving is made using conventional cotton equipment is spun into a 10/1 cotton count and taken up on 3 pound packages. Approximately 1000 pounds of yarn is produced The 10/1 grafted polyolefin is plied to make a 10/2 dyeable polyolefin.
c.) Knitted Sleeve - The 10/2 polyolefin yarn is knitted into a single endless sleeve.
d.) Space dye printing - Three colors are printed on the sleeve using the knit de knit process well known in the art. This is a continuous process whereby the undyed sleeve passes through a squeegee roller submerged in a disperse dye tank to apply the first shade of color. The sleeve continues to a second patterned roller, which over prints a second shade and then continues to a third roller, which over prints a patterned third shade. Each shade contains disperse dye. The colored knitted sleeve is exposed to steam for at least 2 minutes and preferably 4 minutes. This sets the disperse dye to an acceptable depth of shade. The knitted sleeve has a solid background shade of beige overprinted with deep brown and charcoal. The sleeve is then washed and dried on the continuous range. The dryer is set at a low temperature of 200°F and the water is evaporated. The dried sleeve is collected in a can container and moved to the winding room.
e.) The resultant sleeve is de-knit or wound onto a yarn package using a winding operation well know to those skilled in the art. The yarn is a pleasing beige color with dots of dark brown and dark charcoal and is put up on 3-pound cones.
f.) The 10/2 polyolefin space dyed yarn is knitted on a 10 cut knitting machine. A pleasing three-tone space dyed fabric is the result. The space dyed fabric of polyolefin is surprisingly free of patterns usually associated with skein or dip dyeing of sweater yarns. The fabric is washed with hot water in a jet dye or winch dye machine to add bulk and to clarify the colors. This also assures the fact that the finished sweater will not shrink when washed by the end user. The fabric is dried in a cool oven at 200°F. While it is not necessary to wash the fabric, it is worth the extra step to make the fabric shrink proof.
g.) The space dyed sweater fabric is cut and sewn and is surprisingly novel. It is 30% lighter in weight than a cotton sweater made to the same specifications. This is because the polyolefin specific gravity is 0.91 g/cc vs. 1.38 g/cc or more for cotton or cotton-polyester blend. This novel sweater will actually float in water.

While this example uses a 10/2 yarn, it should be noted that any size dyeable polyolefin that would be practical to go through the knit de knit system would be suitable. Many pleasing color effects can be achieved and should not be limited to the example set forth. One skilled in the art should experiment to find a pleasing result with either spun yarn or filament yarn.

Other methods of space dye or print dyeing yarn can be used. One skilled in the art will adjust the various machines to the specifications that I outlined above. Warp printing or package impregnation are two other common methods use to space dye yarns.

There are numerous sizes of yarns used to make fabrics. Spun yarns are usually made into 18's, 20's, 24's, 28's, 30's, 36's, 40's, either plied or in single form. Continuous filament yarn is usually made into 20/1, 70/1, 100/1, 150/1, 200/1 300/1, 500/1 or 1000/1. The nomenclature used for continuous filament yarns is based on the yarn linear density in denier and the number of ends. These are common sizes of yarns that are used to make woven, or knit fabrics. It should be understood that any size yarn or staple fiber could be made dyeable using the preferred mixture of the invention. From these yarns dyeable woven, non-woven or knitted fabrics of all types and descriptions will be made.

It should also be noted that there are continuous filament machines that extrude more than one color using multiple extruders to feed the spinneret. When a dye enhancer mix is introduced instead of pigment at differing percentage mixes into each extruder the result will be a continuous filament yarn that will accept various tones of a shade from a single dyebath.

### Example VI - Tri-Tone Filament Fabric

a.) Pellets of polyolefin with a Melt Flow Index of 8-22 dg/min are intimately mixed with a polyolefin dye enhancement blend described above. This machine has three extruders that will separately feed a single spinneret. Barmag, Plantex, Rieter make such machines. One extruder is fed a mix of 95% polyolefin and 5% Dye enhancer, another is fed 97% polyolefin and 3% dye enhancer, and the third is fed 99% polyolefin and 1 % dye enhancer. A single white yarn with a dpf of 5.4 consisting of three separate levels of dye affinity is taken up on three-pound (1.3 kg) packages.
b.) The yarn at this stage has to be drawn and textured. The yarn is drawn 3X and false twist textured on conventional draw twisting machinery known to those skilled in the art. The result is a continuous filament yarn having 300 ends of 1.8 dpf. One third of the yarn has a 5% additive, one third has 3% additive and one third has a 1 % additive.
c.) The yarn is knitted on a 30" (76 cm) rib knitting machine. The tubular cloth produced is a white greige tube, which is shipped to the dye house.
d.) The tube is dyed with a 0.5% owg disperse dye. The surprising result is a dyed fabric that simulates a tweed fabric having a deep, medium and a light blue tone. One-third of the yarn accepted one level of disperse dye, 1/3 of the yarn accepted a second level of disperse dye, and 1/3 of the yarn accepted a third level of disperse dye.
e.) The fabric is opened, dried at a low temperature of 200°F (93.3°C) and rolled for shipment.
f.) The fabric is cut and sewn into a full-fashioned ribbed spring coat with dress buttons. One skilled in the art would vary both the size of the extrusion and the grafted disperse dyeable compound to achieve the effect that they desire.

Variations would be for one skilled in the art to knit a dyeable tri-tone yarn with a dyeable single tone yarn. When the fabric is dyed the fabric would have stripes of solid tones with stripes of tri-tones. This is just an example and should serve to show that many variations are now made possible using this invention. It would be desirable to feed two extruders with additive while the third produces an undyeable portion. When subjected to a disperse dye bath of Terasil Blue, two ends will dye blue while the third end will remain white.

A fabric containing tri-tone yarns would be ideal to space dye or print, as the printed yarn would dye into separate tones within tones at each strike of color letdown. Of course one skilled in the art should not be limited but should be guided by the above examples.

This invention enables the yarn spinner, the fabric maker and the dyer to create novel lightweight colored fabrics. It enables a fabric to be held until the last moment before dyeing and shipping to be manufactured in shades that match the current time of year and season.

### Example VII - Woven Fabric of Polyolefin

Polyolefin yarn is made according to the invention. It is enhanced to accept a deep solid shade of disperse dye. The size is 24/1 spun on the cotton spinning system taken up on three-pound (1.3 kg) cones. It contains a dyeable graft of 5% owg.

The appropriate multiple ends are slashed and taken up on a weaving beam. The beam is set to feed a simple box loom.

Polyolefin yarn made according to the invention containing 2.5% dyeable graft is made to feed the weft insertion on the box loom. The size is 24/1 spun on the cotton spinning system. A plain weave woven fabric 60" (152 cm) wide is produced. By composition, one half of the yarn contains a 5% dye enhancer made according to the invention and one half contains a yarn that has a 2.5% dye enhancer made according to the invention.

The woven greige cloth is dyed in a jet dyer set at 250°F (121°C) with a Terasil Blue disperse dye using 0.5% on the weight of the goods.

The warp or beamed yarn dyes a deep shade of blue and the weft yarn dyes to a medium shade of blue. The fabric is a two-tone tweed color.

The fabric is dried in a relatively cool oven at 200°F (93.3°C) to keep the temperature below the melt temperature of polyolefin.

The fabric is tentered or held in a stretched position while it passes through drying oven. This "sets" the fabric so that it will not shrink in any further processing at a later time.

The fabric is cut and sewn into a ladies jacket and skirt. When combined the garment is a ladies suit made from 100% polyolefin fabric. This suit is easy care washable, stain resistant, and lightweight. It is 38% lighter than a similar suit made from polyester or wool blends.

The above is an example. Using this invention, one skilled in the art could make many types of woven dyeable fabrics for use in the apparel or home furnishings industry. Patterns such as bird's eye, jacquard, twill or prints are some of the possibilities. Each will be lightweight, stain resistant, and able to be disperse dyed to any shade that the market will demand.

### Example VIII - Sheath- Core Filaments or Yarn

In US Patent No. 6,136,436 Kennedy et al. there is disclosed a method of manufacturing a sheath core continuous filament fiber or yarn, the disclosure thereof is incorporated herein in its entirety. To the process of US Patent No 6,136,436 the following addition is made thereto:

The US Patent No. 6,136,436 teaches a sheath of nylon or polyester on a core of polyolefin. In this example I use a core and sheath of polyolefin. The outer sheath comprises 10% to 70% of the total mass and is made from polyolefin modified with the amorphous PETG dye enhancer. The core is 100% polyolefin.

A fabric is knitted or woven with one or more yarns containing differing dye levels. The fabric is dyed as per the examples above. Great cost savings result because the sheath comprises only 10% to 70% of the total composition. One skilled in the art would vary the percentages of the sheath and the dye enhancer to achieve the effect desired.

A variation of the above is to use a sheath of non-dyeable polyolefin and a core of dyeable polyolefin. The result is a yarn with a clear outer shell with color in the core. One skilled in the art can manipulate this Yarn or fiber to create the effect desired.

### Example IX - Fabric knitted or Woven using Dyeable Polyolefin Blended with Polyester

A novel and surprising effect is achieved when blending polyester and dyeable polyolefin fiber to make yarn. The resultant yarn has an outer cover consisting mostly of polyester and a core mostly of dyeable polyolefin. There is minor crossover in both the sheath and core.

Polyolefin fiber is made according to the invention. The fiber is enhanced with the additive of this invention to accept a solid shade of disperse dye
a.) Pellets of polyolefin with a Melt Flow Index of 8-22 dg/min are extruded and intimately mixed with the blend using the invention's preferred mixture of PETG and polypropylene-graft-maleic anhydride. The blend of 95% polyolefin and 5% PETG/polypropylene-graft-maleic anhydride is extruded into a staple mass using conventional staple extrusion equipment. The fiber is 1.8 dpf and is cut to 1.5" (3.8 cm). Approximately 650 pounds (295 kg) of staple are produced and baled. The denier per filament is close to that of cotton and so is the staple length.
b.) Dye enhanced polyolefin staple fibers are blended together with polyester staple fibers having a 1.35 denier per filament cut to a 1.5" (3.8 cm) staple length at the cotton carding process and made into an intimate blend of roving containing 65% dyeable polyolefin and 35% polyester. The roving is made using conventional cotton equipment and is ring spun into a 28/1 cotton count then taken up on 3-pound (1.3 kg) packages.
c.) Approximate 1000 pounds (454 kg) of a unique yarn is produced. The heavier polyester having a specific gravity of 1.38 g/cc migrates to the outside of the yarn due to centrifugal force and becomes a sheath surrounding the lighter weight polyolefin which remains mostly in the core.
d.) The yarn is twist plied into a 28/2 ply yarn. Both ends contain 65% dyeable polyolefin and 35% polyester.
e.) This yarn is then converted to a woven greige cloth on a conventional box loom using 40 ends per inch (16 ends per cm) in the warp and 40 ends per inch (16 ends per cm) in the fill. The fabric is woven to 67" (170 cm) width.
f.) The greige goods fabric is dyed in a conventional jet-dyeing machine ordinarily used to dye polyester. The temperature is kept at 250°F (121 °C) to avoid damage to the polyolefin. A disperse dye Terasil Blue BRL at 0.5% owg is used with standard dye dispersion chemicals and water. The resultant woven fabric is a novel and pleasing bright shade of deep blue. The fabric is dried in a relatively cool oven. The temperature is kept below the melt temperature of polyolefin but is elevated to 255°F (124°C) as the core of polyolefin is shielded by the sheath of polyester. The water evaporates leaving a dry bright fabric, which is rolled and wrapped for shipment. Drying time is greatly reduced in comparison to cotton or cotton-polyester blend because the polyolefin only holds limited amounts of water and only 35% of the fabric is polyester.
g.) A novel result is a fabric that shrinks in with to 61.5" (156 cm) after finishing. The fabric is then stable and does not shrink more than 1% after washing. This effect makes the fabric a wash and wear easy care fabric.
h.) The woven dyed fabric is cut and sewn and is surprisingly novel. It is at least 20% lighter in weight than a polyester garment made to the same specifications. This is because the polyester/polyolefin specific gravity is 1.07 g/cc versus 1.38 g/cc for polyester. The fabric has the soft feel of cotton yet is substantially lighter in weight. It is understood by one skilled in the art that different weight fabrics using various sizes of yarn can be produced in the same manner. In addition the yarn can be used to knit fabric using conventional knitting machines.

Woven, knitted or non-woven fabrics can be produced using this blend.

The advantages of a fabric and yarn made with a blend of polyester and dyeable polyolefin are as follows:
1.) The weaving, knitting, and dyeing process is fully developed in all parts of the world.
2.) Deeper dyeing polyester can be used as the sheath.
3.) Fabrics can be piece dyed or printed using conventional equipment.
4.) Sublimation Printing using heat transfer process can be used.
5.) Fabric is lighter in weight that 100% polyester or 100% cotton or a blend of both.
6.) Permanent press is easily implemented.
7.) Fabric is washable and line or machine dry-able.
8.) Use of micro denier polyester creates a soft fabric.
9.) The fabric will sew on any conventional sewing machine.
10.) The dyed fabric will typically not shrink more than 1-5%.

### Example X - Fabric Woven or knitted using Dyeable Polyolefin Blended with Nylon

A novel and surprising effect is achieved when blending nylon (either nylon 6 or nylon 66) and dyeable polyolefin fiber to make yarn. The resultant yarn has an outer cover consisting mostly of nylon and a core mostly of dyeable polyolefin. There is minor crossover in both the sheath and core. The resultant yarn has a sheath mostly of nylon and a core mostly of dyeable polyolefin.

Polyolefin fiber is made according to the invention. The fiber is enhanced to accept a solid shade of disperse dye.
a.) Pellets of polyolefin with a Melt Flow Index of 8-22 dg/min are extruded and intimately mixed with the blend using the above-preferred mixture of PETG and polypropylene-graft-maleic anhydride. The blend of 95% polyolefin and 5% PETG/ polypropylene-graft-maleic anhydride is extruded into staple fibers using conventional staple extrusion equipment. The fiber is 1.8 dpf and is cut to 1.5" (3.8 cm). Approximately 650 pounds (295 kg) of staple are produced and baled. The denier per filament is close to that of cotton and so is the staple length.
b.) Dye enhanced polyolefin staple fibers are blended together with Nylon staple fibers having a 1.35 denier per filament cut to a 1.5" (3.8 cm) staple length at the cotton carding process and made into an intimate blend of roving containing 65% dyeable polyolefin and 35% nylon. The roving made using conventional cotton equipment is ring spun into a 28/1 cotton count and the yarn is taken up on 3-pound (1.3 kg) packages.
c.) Approximately 1000 pounds (454 kg) of a unique yarn is produced. The heavier nylon having a specific gravity of 1.14 g/cc migrates to the outside of the yarn due to centrifugal force and becomes a sheath surrounding the lighter weight polyolefin which remains mostly in the core.
c.) The yarn is twist plied into a 28/2 ply yarn.
c.) This yarn is then converted to a woven greige cloth on a conventional box loom using 40 ends per inch (16 ends per cm) in the warp and 40 ends per inch (16 ends per cm) in the fill. The fabric is woven to 67" (170 cm) width.
d.) The greige goods fabric is dyed in a conventional jet-dyeing machine ordinarily used to dye fabric. The temperature is kept at 250°F (121°C) to avoid damage to the polyolefin. A disperse dye Terasil Blue BRL at 0.5% owg is used with standard dye dispersion chemicals and water. The resultant woven fabric is a novel and pleasing bright shade of deep blue. The fabric is dried in a relatively cool oven. The temperature is kept below the melt temperature of polyolefin but is elevated to 255°F (124°C) as the core of polyolefin is shielded by the sheath of nylon. The water flashes off leaving a dry bright fabric, which is rolled and wrapped for shipment. Drying time is greatly reduced in comparison to a cotton or cotton polyester blend because the polyolefin only holds limited amounts of water and only 35% of the fabric is nylon.
e.) When an acid dye is used to dye the fabric only the nylon will dye. If a disperse dye and an acid dye is used then the nylon can be dyed one shade while the polyolefin will dye to another creating a distinct heather effect.
   A novel result is a fabric that shrinks to 61.5" (156 cm) after finishing. The fabric is then stable and does not shrink more than 1-5% after washing. This effect makes the fabric a wash and wear easy care fabric.
f.) The woven dyed fabric is cut and sewn and is surprisingly novel. It is at least 20% lighter in weight than a cotton garment made to the same specifications. This is because the Nylon/polyolefin specific gravity is 0.99 g/cc versus more than 1.38 g/cc for cotton. The fabric has the soft feel of cotton yet is substantially lighter in weight. One skilled in the art understands that different weight fabrics using various sizes of yarn can be produced in the same manner.

Woven, knitted or non-woven fabrics can be produced using this blend. Nylon is very easy to dye using an aqueous dye system. The fabrics made of nylon and polyolefin blends will print using any acid system commonly used to dye nylon or silk.

In addition, the fabric can be printed using any aqueous dye system commonly used to print nylon, silk or polyester.

The advantages of a fabric and yarn made with a blend of nylon and dyeable polyolefin are as follows:
1.) The weaving, knitting, and dyeing process is fully developed in all parts of the world.
2.) Fabrics can be piece dyed using conventional equipment.
3.) Fabrics can be piece dyed using nylon dye methods.
4.) Deeper dyeing Nylon can be used as the sheath.
5.) Cationic dyeing nylon can be used as the sheath.
6.) Printing using any aqueous systems can be accomplished.
7.) Fabric is lighter in weight that 100% nylon, 100% cotton or blend of Polyester/Cotton.
8.) Fabric is washable and line or machine dryable.
9.) Use of micro denier nylon creates a soft fabric.
10.) The fabric will sew on any conventional sewing machine.

### Example XI - Selection of Level of Dye Enhancer

Polypropylene pellets (14 dg/min melt flow index) were blended with the dye enhancer masterbatch (50% polypropylene, 48 % PETG and 2% polypropylene-graft-maleic anhydride) in different ratios such that the level of the dye enhancer masterbatch varied from 6-25% of the final composition. The composition was spun into 745 denier as-spun filaments using conventional filament spinning equipment equipped with a 198-hole spinnerette with round holes. The as-spun filament yarns were drawn and bulked on a conventional BCF equipment to produce 350 denier BCF yarns.

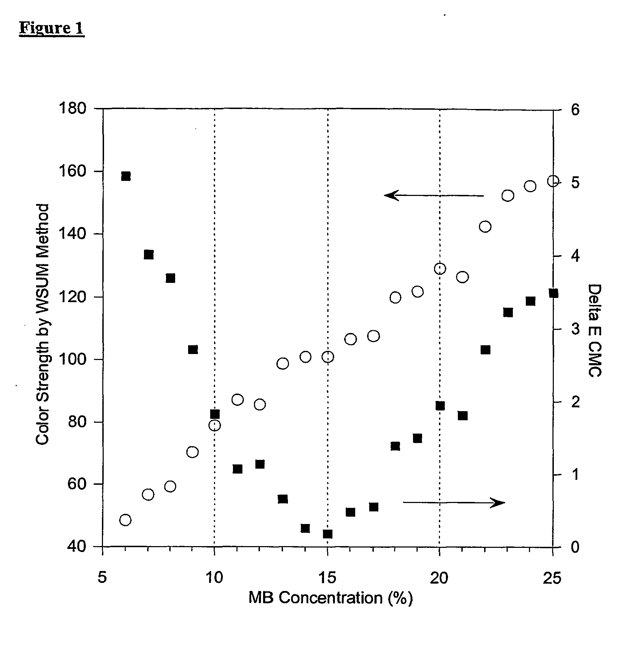

The filament yarns were knitted into a sock on a single-end knitting machine (FAK - Fiber Analysis Knitter). The sock was dyed using a Datacolor Ahiba Nuance ECO-B high-pressure laboratory dyeing machine. The dye liquor was raised to 130°C (266°F) at the maximum rate achievable, held for 30 min at this temperature to effect dyeing, and then cooled to near room temperature at the maximum rate achievable. Terasil Blue GLF disperse dye (2% owg at 4.5-5.5 pH) were used to dye socks blue. Appropriate dye auxiliaries, such as leveling agents, were used. After dyeing, the fabric was washed and dried. Color measurements were made on the dyed knit fabrics using Quest Color Spectrophotometer. For this purpose one sample is set as the standard and the color values of other samples are compared relative to this reference sample (CIELAB color difference). Care was taken to minimize sample reflectivity errors by presenting a smooth fabric and making a color measurement followed by additional measurements after three successive 90° rotations of the knit fabric. The results with D65-10° illuminant are shown in Figure 1. Increase in dye enhancer level results in increased dye uptake. The sample with 15% masterbatch was defined as the 100% color strength control since it was in the middle of the concentration range. The color strength (calculated by WSUM method) of the dyed fabric increases with increasing level of dye enhancer in the final fiber. Delta E CMC is a measure of the difference in color between a reference and a specimen (AATCC Test Method 173). It has proven to be a useful measure of the commercial acceptability of colored products. CMC color difference is often employed in pass/fail color production applications, where a single numerical tolerance can be established and utilized to make acceptability decisions. An important advantage of CMC is that once a tolerance has been successfully implemented for a product, the same tolerance may prove applicable for other colors produced under similar commercial conditions. For certain applications, a Δ*E_{CMC}* tolerance of 0.5 may be considered acceptable for color matching. The level of tolerance can be achieved even with a 1% variation in masterbatch concentration.

### Example XII - Effect of Modification of Compatibilizer

Three masterbatch blends were prepared. The reference blend was the same as that used in earlier examples (Blend A). Blend B had 50% by weight PETG, 7.5% Polybond 3200 and 42.5% polypropylene. Blend C had 60% by weight PETG, 4.4% Polybond 3200 and 35.6% polypropylene. Fibers were made as in Example XI such that the final fibers had 10% PETG in each case. The three fibers were knit into socks, dyed red (2.0% owg Terasil Red) and black (2.0% owg Terasil Black MAW) and the color strengths compared. The fiber from Blend A was chosen as the reference for each comparison. Based on color strength as well as Delta E, there was no meaningful difference between fibers from the three blends.

### Example XIII - Structure of Dyeable Polyolefin Fibers

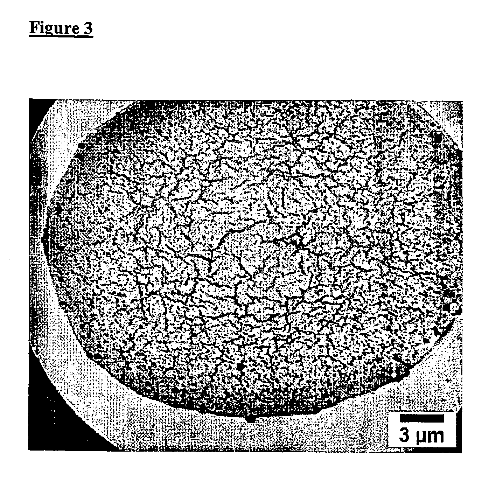

Two as-spun fibers from Example XII were studied by transmission electron microscopy. Fiber A had 20% masterbatch and Fiber B had 10% masterbatch. The fibers were washed with isopropyl alcohol and air dried. They were stained with 0.5% aqueous Ruthenium Tetroxide (RuO₄) overnight. The stained samples were embedded in Spurr epoxy resin and cured overnight at 60° C. Each was microtomed using a diamond knife at room temperature. The microtomed sections were examined on a JEOL 2000fx transmission electron microscope (TEM). Images were collected using both a digital camera and film. Representative micrographs are shown in Figures 2-7 for Fiber A and in Figures 8-9 for Fiber B. Ruthenium tetroxide preferentially diffuses into the amorphous PETG phase rendering it a higher electron density phase. This phase appears as dark regions in the micrographs.

Fiber A contains a spherical electron-dense phase ranging in diameter approximately from 20 to 500 nm with the majority below 100 nm. While this phase distributes fairly uniformly near the surface, they tend to agglomerate forming a network-like structure in the core region. It appears that the concentration of the electron dense phase is higher toward the ore of the fiber than at the surface. Fiber B contains a fairly uniformly distributed spherical electron-dense phase ranging in diameter approximately from 20 to 300 nm with the majority below 100 nm. The larger ones tend to distribute near the surface.

### Example XIV - Comparison with Crystallizable Polyester

Fibers were spun containing 10% PETG (Fiber G) or 10% Eastman F58CC polyester (Fiber T) in a manner similar to that described in Example XI except that neat components were used instead of a masterbatch. The polyester was a precrystallized 0.58 dl/g intrinsic viscosity polyester. In each case 2% polypropylene-graft-maleic anhydride was used in the fiber composition. A sock was knitted containing Fiber G and Fiber T. The sock was dyed using Terasil Black MAW (2% owg) as described in Example XI. Fiber G was used as the reference and Fiber T was compared to it as described in Example XI. Fiber T dyed light compared to Fiber G. The color strength of Fiber T was 79.8 compared to 100 for Fiber G. The Delta E CMC was 3.82, clearly well beyond the 0.5 tolerance for color acceptability. Thus the fibers containing crystallizable PET do not dye as well as the fibers of this invention. Additionally, the spinnability of the two compositions was compared by increasing the take-up speed at constant throughput. The denier of the finest fiber that can be spun is then an indicator of spinnability of the composition. Under equivalent conditions the fiber containing PETG could be spun into 0.83 denier/filament whereas the fiber containing PET could only be spun into 0.93 denier/filament fibers, indicating that the PETG composition had greater spinnability.

It is believed that several reasons support the choice of amorphous polyesters. One, they do not have crystalline regions that do not take up dye. Therefore a smaller content is sufficient to provide the requisite "sites" for disperse dyes. Additionally, dye diffusion can be enhanced since the diffusion path tortuosity is reduced due to absence of crystallites. When the amorphous polyester has a glass transition temperature lower than standard crystalline polyesters, the diffusivity of dyes in the polyester domains is enhanced. When the amorphous polyester does not have a melt viscosity much greater than that for the polyolefin polymer, the tendency for fibril formation due to viscosity differences driven phase de-mixing is diminished. In its place a fine domain continuous or semi-continuous network can be formed. The formation of such as network is believed to be enhanced by compatibilizers, especially at higher concentrations of the dye enhancer.

The embodiments disclosed in this application are to be considered in all respects as illustrative and not restrictive, the scope of the invention being indicated by the appended claims rather than by the foregoing description.

## Claims

1. A dyeable polyolefin fiber comprising polyolefin and dye enhancer, said dye enhancer comprising a polyolefin compatibilizer selected from the group consisting of poly(ethylene-co-vinyl acetate)-graft-maleic anhydride and polyethylene-polypropylene-graft-maleic anhydride.

2. The dyeable polyolefin fiber of claim 1 wherein the dye enhancer comprises a terephthalate-based copolyester.

3. The dyeable polyolefin fiber of claim 2 wherein the terephthalate-based copolyester may be selected from the group consisting of a glycol-modified poly(ethylene terephthalate) copolyester, preferably modified with 1,4-cyclohexanedimethanol (PETG), an acid modified copolyester of poly(cyclohexanedimethylene) terephthalate PCT (PCTA) and a glycol- modified copolyester of poly(cyclohexanedimethylene) terephthalate PCT (PCTG).

4. The dyeable polyolefin fiber of claim 3 wherein the terephthalate-based copolyester comprises PETG.

5. The dyeable polyolefin fiber as claimed in any preceding claims, wherein the polyolefin comprises a polypropylene.

6. The dyeable polyolefin fiber of claim 5 wherein the polypropylene is selected from the group consisting of polypropylene homopolymer, polypropylene copolymers and mixtures thereof.

7. The dyeable polyolefin fiber as claimed in any one of claims 1 to 4, wherein the polyolefin comprises polyethylenes.

8. The dyeable polyolefin fiber as claimed in any preceding claims, wherein the dye enhancer comprises up to about 40% by weight of the fiber.

9. The dyeable polyolefin fiber of claim 8, wherein the dye enhancer comprises between about 0.5% to about 25% by weight of the fiber.

10. The dyeable polyolefin fiber of claim 9, wherein the dye enhancer comprises between about 1.0% to about 12.5% by weight of the fiber.

11. The dyeable polyolefin fiber as claimed in any preceding claims, wherein the fiber is selected from the group consisting of monofilaments, multifilaments, bicomponents, tows, staple or cut fibers, staple yarns and cords.

12. A woven, knitted, spunbond or non-woven fabric manufactured using polyolefin fiber as claimed in any preceding claims.

13. A fabric according to claim 12, having tonal effects, dyed in a single dye bath, wherein said polyolefin fiber contains differing levels of said dye enhancer to accept different levels of disperse dye.

14. A spun yarn or fiber that is a blend of polyester or nylon and dyeable polyolefin fiber as claimed in any one of claims 1 to 11.

15. A woven, knitted, spunbond or non-woven fabric manufactured using a yarn or fiber according to claim 14.

## Patentansprüche

1. Färbbare Polyolefinfaser, umfassend Polyolefin und Farbverstärker, wobei der Farbverstärker ein Polyolefin-Verträglichkeitsvermittler ist, der aus der Gruppe ausgewählt ist, die aus einem mit Maleinsäureanhydrid gepfropften Poly(ethylen-co-vinylacetat) und einem mit Maleinsäureanhydrid gepfropften Polyethylen-Polypropylen besteht.

2. Färbbare Polyolefinfaser nach Anspruch 1, wobei der Farbverstärker ein auf Terephthalat basierendes Copolyester umfasst.

3. Färbbare Polyolefinfaser nach Anspruch 2, wobei das auf Therephthalat basierende Copolyester aus der Gruppe ausgewählt sein kann, die aus einem glycolmodifizierten Poly(ethylentherephthalat;-Copolyester, das vorzugweise mit 1,4-Cyclohexandimethanol (PETG) modifiziert ist, einem säuremodifiziertem Copolyester von Poly(cyclohexandimethylen)terephthalat PCT (PCTA) und einem glycolmodifizierten Copolyester von Poly(cyclohexandimethylen)terephthalat PCT (PCTG) besteht.

4. Färbbare Polyolefinfaser nach Anspruch 3, wobei das auf Terephthalat basierende Copolyester PETG umfasst.

5. Färbbare Polyolefinfaser nach einem der vorhergehenden Ansprüche, wobei das Polyolefin ein Polypropylen umfasst.

6. Färbbare Polyolefinfaser nach Anspruch 5, wobei das Polypropylen aus der Gruppe ausgewählt ist, die aus Polypropylen-Homopolymer, Polypropylen-Copolymeren und Mischungen daraus besteht.

7. Färbbare Polyolefinfaser nach einem der Ansprüche 1 bis 4, wobei das Polyolefin Polyethylene umfasst.

8. Färbbare Polyolefinfaser nach einem der vorhergehenden Ansprüche, wobei der Farbverstärker bis zu etwa 40 Gew.-% der Faser ausmacht.

9. Färbbare Polyolefinfaser nach Anspruch 8, wobei der Farbverstärker zwischen etwa 0,5 Gew.-% und etwa 25 Gew.-% der Faser ausmacht.

10. Färbbare Polyolefinfaser nach Anspruch 9, wobei der Farbverstärker zwischen etwa 1,0 Gew.-% und etwa 12,5 Gew.-%der Faser ausmacht.

11. Färbbare Polyolefinfaser nach einem der vorhergehenden Ansprüche, wobei die Faser aus der Gruppe ausgewählt ist, die aus Monofilamenten, Multifilamenten, Zweikomponentenfasern, Spinnkabeln, Stapel- oder Schnittfasern, Stapelgarnen und Corden besteht.

12. Gewebe, Gewirk, Spinnvlies oder Vlies, das unter Verwendung von Polyolefinfaser nach einem der vorhergehenden Ansprüche hergestellt ist.

13. Textiles Flächengebilde nach Anspruch 12 mit Farbtonwirkungen, das in einem einzigen Farbbad gefärbt ist, wobei die Polyolefinfaser verschiedene Mengen des Farbverstärkers enthält, um verschiedene Mengen des Dispersionsfarbstoffs anzunehmen.

14. Spinngarn oder -faser, das/die eine Mischung aus Polyester oder Nylon und färbbarer Polyolefinfaser nach einem der Ansprüche 1 bis 11 ist.

15. Gewebe, Gewirk, Spinnvlies oder Vlies, das unter Verwendung eines Garns oder einer Faser nach Anspruch 14 hergestellt ist.

## Revendications

1. Fibre de polyoléfine apte à la teinture comprenant une polyoléfine et un renforçateur de colorant, ledit renforçateur de colorant comprenant un agent de compatibilisation polyoléfinique choisi dans le groupe consistant en un copolymère greffé poly(éthylène-co-acétate de vinyle)-anhydride maléique et d'un copolymère greffé (polyéthylène-polypropylène)-anhydride maléique.

2. Fibre de polyoléfine apte à la teinture selon la revendication 1, dans lequel le renforçateur de colorant comprend un copolyester à base de téréphtalate.

3. Fibre de polyoléfine apte à la teinture selon la revendication 2, dans lequel le copolyester à base de téréphtalate peut être choisi dans le groupe consistant en un copolyester de poly(téréphtalate d'éthylène) modifié par un glycol, de préférence modifié par le 1,4-cyclohexanediméthanol (PETG), un copolyester de poly(téréphtalate de cyclohexanediméthylène) PCT modifié par un acide (PCTA), et un copolyester de poly(téréphtalate de cyclohexanediméthylène) PCT modifié par un glycol (PCTG).

4. Fibre de polyoléfine apte à la teinture selon la revendication 3, dans lequel le copolyester à base de téréphtalate comprend du PETG.

5. Fibre de polyoléfine apte à la teinture selon l'une quelconque des revendications précédentes, dans lequel la polyoléfine comprend un polypropylène.

6. Fibre de polyoléfine apte à la teinture selon la revendication 5, dans lequel le polypropylène est choisi dans le groupe consistant en un polypropylène homopolymère, des copolymères de polypropylène, et des mélanges de ceux-ci.

7. Fibre de polyoléfine apte à la teinture selon l'une quelconque des revendications 1 à 4, dans lequel la polyoléfine comprend des polyéthylènes.

8. Fibre de polyoléfine apte à la teinture selon l'une quelconque des revendications précédentes, dans lequel le renforçateur de colorant constitue jusqu'à environ 40 % en poids de la fibre.

9. Fibre de polyoléfine apte à la teinture selon la revendication 8, dans lequel le renforçateur de colorant constitue d'environ 0,5 % à environ 25 % en poids de la fibre.

10. Fibre de polyoléfine apte à la teinture selon la revendication 9, dans lequel le renforçateur de colorant constitue d'environ 1,0 % à environ 12,5 % en poids de la fibre.

11. Fibre de polyoléfine apte à la teinture selon l'une quelconque des revendications précédentes, dans lequel la fibre est choisie dans le groupe consistant en les monofilaments, les multifilaments, les bicomposants, les câbles de filature, les fibres discontinues ou coupées, les fils discontinus et les câbles.

12. Tissu tissé, tricoté, filé-lié ou non-tissé, fabriqué par utilisation d'une fibre de polyoléfine selon l'une quelconque des revendications précédentes.

13. Tissu selon la revendication 12, ayant des effets de tonalité, teint dans un bain de teinture unique, dans lequel ladite fibre de polyoléfine contient différentes quantités dudit renforçateur de colorant, de façon à accepter différentes quantités de colorant de dispersion.

14. Filé ou fibre qui est un mélange de polyester ou de nylon et d'une fibre de polyoléfine apte à la teinture selon l'une quelconque des revendications 1 à 11.

15. Tissu tissé, tricoté, filé-lié ou non-tissé, fabriqué par utilisation d'un fil ou d'une fibre selon la revendication 14.
